# EUROPÄISCHE PATENTSCHRIFT

(11) **EP 2 267 256 B1**
(45) Veröffentlichungstag und Bekanntmachung des Hinweises auf die Patenterteilung: **02.04.2014**
(21) Anmeldenummer: 10006374.2
(22) Anmeldetag: 18.06.2010
(51) Int. Cl.: E05B 67/24, B62H 5/18, E05B 67/02

(54) **Bügelschloss**
Padlock
Cadenas

(30) Priorität: 23.06.2009 DE 102009030031
(43) Veröffentlichungstag der Anmeldung: 29.12.2010
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- WO-A1-97/01012
- DE-C- 180 470
- GB-A- 273 220
- US-A- 0 972 171
- US-A- 2 460 615

## Beschreibung

Die Erfindung betrifft ein Bügelschloss mit einem Schlosskörper und einem Bügel, der relativ zu dem Schlosskörper zwischen einer Öffnungsstellung und einer Schließstellung bewegbar ist. Der Schlosskörper besitzt ein Schlossgehäuse und ein Schließwerk, das in dem Schlossgehäuse befestigt ist und einen Mitnehmer aufweist. Der Mitnehmer ist wahlweise in eine Entriegelungsstellung oder in eine Verriegelungsstellung bewegbar. In dem Schlosskörper ist ferner eine Verriegelungseinrichtung vorgesehen, die zwischen dem Mitnehmer des Schließwerks, dem Bügel und dem Schlossgehäuse wirksam ist. Die Verriegelungseinrichtung verriegelt den Bügel an dem Schlossgehäuse, wenn der Bügel sich in der Schließstellung befindet und der Mitnehmer des Schließwerks sich in der Verriegelungsstellung befindet.

Ein derartiges Bügelschloss ist beispielsweise als ein Vorhängeschloss bekannt, das einen im Wesentlichen U-förmigen Bügel besitzt. Der Bügel kann in seiner Öffnungsstellung durch eine Öse oder dergleichen geführt werden, um ein Objekt (z.B. eine Tür mit Überfalle) zu sichern.

Bei einer anderen Ausführungsform ist ein derartiges Bügelschloss als ein Bremsscheibenschloss ausgebildet, das zum Sichern beispielsweise eines Motorrads, eines Motorrollers oder eines Quads gegen eine unbefugte Benutzung dient. Hierfür durchgreift der Bügel eine Öffnung einer Bremsscheibe des geparkten Fahrzeugs. Durch den in der Schließstellung verriegelten Bügel ist das Schloss somit an der Bremsscheibe gefangen, und die Benutzung des Fahrzeugs wird verhindert, bis das Schloss wieder von der Bremsscheibe gelöst wird.

Die Verriegelungseinrichtung eines derartigen Bügelschlosses muss innerhalb des Schlossgehäuses bewegliche Teile besitzen, um den Bügel in seiner Schließstellung wahlweise an dem Schlosskörper verriegeln zu können. Hierfür besitzt das Schlossgehäuse üblicherweise unterschiedliche Halte- und Führungsabschnitte für die beweglichen Teile der Verriegelungseinrichtung, die insbesondere dreidimensional strukturiert sind. Hierdurch besitzt das Schlossgehäuse jedoch einen unerwünscht komplexen Aufbau und ist dementsprechend teuer in der Herstellung. Außerdem besitzt der Schlosskörper eine für manche Anwendungen unerwünscht große Breite, wenn die Verriegelungseinrichtung zwischen dem Mitnehmer des Schließwerks und dem Bügel in einem Halte- und Führungsabschnitt des Schlossgehäuses aufgenommen ist.

Die US 0 972 171 A1 beschreibt ein Bügelschloss mit den Merkmalen des Oberbegriffs des Anspruchs 1. In der GB 273 220 A wird ein Bügelschloss mit einem versetzbaren Bügel beschrieben, an dem schwenkbar eine oder mehrere Verriegelungsplatten angeordnet sind, in Abhängigkeit von deren Stellung der Bügel freigegeben oder gegen ein Öffnen des Bügelschlosses durch Wechselwirkung jeweiliger Verriegelungsplatten mit dem Gehäuse des Bügelschlosses gesperrt ist.

Es ist eine Aufgabe der Erfindung, ein Bügelschloss mit einem Schlosskörper und einem beweglichen Bügel zu schaffen, das einen einfachen Aufbau besitzt und eine schmale Bauform ermöglicht.

Diese Aufgabe wird ein Bügelschloss mit den Merkmalen des Anspruchs 1 gelöst.

Bei dem erfindungsgemäßen Bügelschloss ist zumindest ein Teil derjenigen Elemente, die zwischen dem Mitnehmer des Schließwerks, dem Bügel und dem Schlossgehäuse wirksam sind, um den Bügel in seiner Schließstellung an dem Schlossgehäuse zu verriegeln, nämlich wenigstens ein Riegelelement der Verriegelungseinrichtung, nicht nur zwischen einer Entriegelungsstellung und einer Verriegelungsstellung bewegbar (was typischerweise in einer Richtung senkrecht zu der Betätigungsachse des Schließwerks möglich ist). Sondern der betreffende Teil der Verriegelungs-einrichtung ist auch gemeinsam mit dem Bügel zwischen der Öffnungsstellung und der Schließstellung des Bügels bewegbar (insbesondere parallel zu der Betätigungsachse des Schließwerks). Hierbei wird der Umstand ausgenutzt, dass der betreffende Teil der Verriegelungseinrichtung ohnehin keine Verriegelungsfunktion zu erfüllen hat, wenn der Bügel sich nicht in der Schließstellung, sondern in der Öffnungsstellung oder in einer Zwischenstellung befindet.

Somit ist es möglich, einen Teil der Verriegelungseinrichtung oder die gesamte Verriegelungseinrichtung in dem beweglichen Bügel zu halten und/ oder beweglich zu lagern. Das Schlossgehäuse kann somit einen besonders einfachen Aufbau besitzen, insbesondere mit einfacheren Halte-und Führungsabschnitten für die Verriegelungseinrichtung oder sogar ohne derartige Halte- und Führungsabschnitte.

Ein weiterer Vorteil besteht darin, dass die (zumindest teilweise in dem Bügel aufgenommene) Verriegelungseinrichtung an einer Außenseite des Bügels mit dem Schlossgehäuse zusammenwirken kann, um den Bügel in seiner Schließstellung an dem Schlossgehäuse zu verriegeln, wenn der Mitnehmer des Schließwerks und somit die Verriegelungseinrichtung sich in der Verriegelungsstellung befinden. Als Außenseite des Bügels ist in diesem Zusammenhang eine solche Seite des Bügels zu verstehen, die einer (üblicherweise durch einen Zentralbereich des Schlosskörpers verlaufenden) Betätigungsachse des Schließwerks abgewandt ist. Hierdurch ist eine besonders schmale Bauform des Schlosskörpers möglich, insbesondere in einer Richtung senkrecht zu der Betätigungsachse des Schließwerks und/oder senkrecht zu der Bewegungsrichtung des Bügels. Der Mitnehmer des Schließwerks, die Verriegelungseinrichtung, der Bügel und das Schlossgehäuse müssen nämlich nicht streng aufeinanderfolgend nebeneinander angeordnet sein, wie dies insbesondere bei bekannten Vorhängeschlössern der Fall ist. Stattdessen ist es beispielsweise möglich, dass lediglich die Verriegelungseinrichtung und das Schlossgehäuse nebeneinander angeordnet sind, während der Bügel einen Teil der Verriegelungseinrichtung (insbesondere den beweglichen Teil) umgreift.

Sofern im Zusammenhang mit der Erfindung auf den "beweglichen Teil" der Verriegelungseinrichtung Bezug genommen wird, ist hierunter derjenige Teil der Verriegelungseinrichtung zu verstehen, der gemeinsam mit dem Bügel zwischen der Öffnungsstellung und der Schließstellung des Bügels bewegbar ist, also zumindest das wenigstens eine Riegelelement der Verriegelungseinrichtung.

Vorteilhafte Ausführungsformen der Erfindung sind nachfolgend und in den abhängigen Ansprüchen genannt.

Vorzugsweise ist der bewegliche Teil der Verriegelungseinrichtung in einem Halteabschnitt des Bügels aufgenommen, zumindest während der Bügel zwischen der Öffnungsstellung und der Schließstellung bewegt wird. Hierdurch ist kein entsprechender Halte- oder Führungsabschnitt an der Innenseite des Schlossgehäuses erforderlich, oder ein solcher Halte- oder Führungsabschnitt des Schlossgehäuses kann einen vereinfachten Aufbau besitzen. Der genannte Halteabschnitt an dem Bügel kann hingegen auf einfache Weise ausgebildet sein, beispielsweise durch Einbringen einer Bohrung.

Der genannte Halteabschnitt des Bügels kann gemäß einer vorteilhaften Ausführungsform dazu dienen, mit der Verriegelungseinrichtung zusammenzuwirken, um den Bügel in seiner Schließstellung an dem Schlossgehäuse zu verriegeln. Hierfür ist es bevorzugt, wenn der bewegliche Teil der Verriegelungseinrichtung teilweise in dem genannten Halteabschnitt des Bügels aufgenommen ist und teilweise in eine Eingriffsöffnung des Schlossgehäuses eingreift, wenn der Bügel sich in der Schließstellung befindet und wenn der Mitnehmer des Schließwerks und somit auch die Verriegelungseinrichtung sich in der Verriegelungsstellung befinden.

Ferner ist es bevorzugt, wenn der genannte Halteabschnitt des Bügels im Schlosskörper verbleibt, während der Bügel zwischen der Öffnungsstellung und der Schließstellung bewegt wird, also insbesondere auch in der Öffnungsstellung des Bügels. Hierdurch ist der in dem Bügel gehaltene bewegliche Teil der Verriegelungseinrichtung stets zuverlässig im Schlosskörper gefangen.

Besonders vorteilhaft ist es, wenn der Bügel an einer Führungsfläche an einer Innenseite des Schlossgehäuses beweglich gelagert ist, wobei diese Führungsfläche zugleich den beweglichen Teil der Verriegelungseinrichtung in dem genannten Halteabschnitt des Bügels sichert, während der Bügel zwischen der Öffnungsstellung und der Schließstellung bewegt wird. Mit anderen Worten bildet die Führungsfläche des Schlossgehäuses nicht nur einen Gleitsitz für den beweglichen Bügel, sondern hält auch noch den beweglichen Teil der Verriegelungseinrichtung in dem Halteabschnitt des Bügels gefangen, damit dieser während der Bewegung des Bügels nicht unbeabsichtigt den Halteabschnitt des Bügels verlässt.

Erfindungsgemäß ist die Verriegelungseinrichtung des Schlosskörpers mehrteilig ausgebildet, wobei ein Teil gemeinsam mit dem Bügel beweglich ist und ein anderer Teil der Bewegung des Bügels hingegen nicht folgt, wenn dieser sich zwischen der Öffnungsstellung und der Schließstellung bewegt. Insbesondere weist die Verriegelungseinrichtung wenigstens ein Riegelelement und ein drehbewegliches Antriebselement auf, wobei das Antriebselement mit dem Mitnehmer des Schließwerks gekoppelt oder koppelbar ist (z.B. drehfest oder federvorgespannt) und wenigstens einen Nockenabschnitt aufweist. Dieser Nockenabschnitt wirkt mit dem wenigstens einen Riegelelement zusammen, um dieses seitlich zu versetzen, wenn der Mitnehmer durch entsprechende Betätigung des Schließwerks von der Entriegelungsstellung in die Verriegelungsstellung gedreht wird.

Bei dem genannten Riegelelement kann es sich beispielsweise um eine Verriegelungskugel handeln. Alternativ kann beispielsweise auch ein Verriegelungsbolzen oder ein Verriegelungsplättchen vorgesehen sein. Das genannte Antriebselement kann beispielsweise durch einen Kugelschieber gebildet sein.

Vorzugsweise sind zwei gleichartige Riegelelemente vorgesehen, die an zwei einander gegenüberliegenden Seiten des Antriebselements mit diesem zusammenwirken.

Das genannte Antriebselement der Verriegelungseinrichtung kann mit dem Mitnehmer des Schließwerks starr gekoppelt sein, d.h. nicht nur drehfest, sondern auch in axialer Richtung fest, wobei lediglich das genannte wenigstens eine Riegelelement gemeinsam mit dem Bügel zwischen der Öffnungsstellung und der Schließstellung bewegbar ist. In diesem Fall gelangt das Riegelelement in Eingriff bzw. außer Eingriff mit dem Antriebselement, wenn der Bügel zwischen der Öffnungsstellung und der Schließstellung bewegt wird. Alternativ hierzu ist es jedoch auch möglich, dass die gesamte Verriegelungseinrichtung, die zwischen dem Mitnehmer, dem Bügel und dem Schlossgehäuse wirksam ist, gemeinsam mit dem Bügel zwischen der Öffnungsstellung und der Schließstellung des Bügels bewegbar ist. Insbesondere kann also vorgesehen sein, dass auch das genannte Antriebselement gemeinsam mit dem Bügel bewegbar ist. In diesem Fall wird das Antriebselement mit dem Mitnehmer des Schließwerks in Eingriff bzw. außer Eingriff gebracht, wenn der Bügel zwischen der Öffnungsstellung und der Schließstellung bewegt wird.

Das Schlossgehäuse kann im Zusammenhang mit der Erfindung generell zumindest ein Außengehäuse aufweisen. Das Schlossgehäuse besitzt einen besonders sicheren und dennoch kostengünstigen Aufbau, wenn es ein Außengehäuse aufweist, das durch einen Rohrabschnitt mit einer Längsachse gebildet ist, die parallel zu der Bewegungsrichtung des Bügels verläuft. Ein derartiger Rohrabschnitt kann einen im Wesentlichen rechteckigen Querschnitt aufweisen, d.h. das Außengehäuse kann im Wesentlichen durch einen Vierkantabschnitt gebildet sein, natürlich mit den erforderlichen Abrundungen und Ausnehmungen (z.B. Aufnahmespalt für eine Bremsscheibe, wie nachfolgend noch erläutert wird). Hierdurch kann das Außengehäuse auf einfache Weise als ein einteiliger, stabiler Hohlkörper gebildet sein, der insbesondere durch Strangpressen und gegebenenfalls Biegeumformen und/oder Härten herstellbar ist.

Das Bügelschloss besitzt eine besonders einfache Handhabung, wenn der Bügel in Richtung seiner Öffnungsstellung vorgespannt ist. Somit wird der Bügel automatisch aus dem Schlosskörper ausgefahren, sobald durch entsprechende Betätigung des Schließwerks der Mitnehmer in die Entriegelungsstellung gebracht wird.

Gemäß einer bevorzugten Ausführungsform besitzt der Bügel bezogen auf seine Öffnungsstellung außerhalb des Schlosskörpers im Wesentlichen eine L-Form, wobei der Bügel einen länglichen Sicherungsabschnitt und einen länglichen Verbindungsabschnitt aufweist. Der Sicherungsabschnitt erstreckt sich quer zu der Bewegungsrichtung des Bügels, d.h. senkrecht zu der Bewegungsrichtung des Bügels oder in einem spitzen Winkel (Winkel <45°) zu der Bewegungsrichtung des Bügels. Der Sicherungsabschnitt besitzt ein freies Ende. Der Verbindungsabschnitt hingegen erstreckt sich im Wesentlichen parallel zu der Bewegungsrichtung des Bügels und verbindet den Sicherungsabschnitt mit dem Schlosskörper (insbesondere über den genannten Halteabschnitt des Bügels). Somit ist der Bügel in seiner Öffnungsstellung im Wesentlichen hakenartig geformt und seitlich offen. Das genannte freie Ende des Sicherungsabschnitts kann somit in eine Befestigungsöffnung eines zu sichernden Objekts (z.B. Öse, Bremsscheiben-Belüftungsöffnung) eingeführt werden. Durch Bewegen des Bügels in die Schließstellung wird ein Formschluss des Sicherungsabschnitts des Bügels mit dem Schlosskörper bewirkt, um das Bügelschloss an dem betreffenden Objekt festzulegen.

Bei dieser Ausführungsform ist es ferner bevorzugt, wenn der Schlosskörper einen Aufnahmespalt besitzt, der zur Aufnahme des zu sichernden Objekts oder eines Teils hiervon ausgebildet ist. In diesem Fall verschließt der Sicherungsabschnitt des Bügels den Aufnahmespalt, wenn der Bügel sich in der Schließstellung befindet.

Hierbei ist es bevorzugt, wenn der Sicherungsabschnitt des Bügels zumindest an dem genannten freie Ende eine Blockierverbreiterung besitzt, die in der Schließstellung des Bügels über das Schlossgehäuse geringfügig übersteht, wobei das Schlossgehäuse an seiner Außenseite in Flucht zu der betreffenden Blockierverbreiterung des Sicherungsabschnitts des Bügels eine zugeordnete Eingriffsvertiefung besitzt. Die jeweilige Eingriffsvertiefung ist dazu ausgebildet, die zugeordnete Blockierverbreiterung aufzunehmen, falls das Schlossgehäuse im Bereich des Aufnahmespalts auseinandergespreizt wird. Mit anderen Worten gelangt im Falle eines Auf bruchversuchs durch Aufweiten des genannten Aufnahmespalts die Blockierverbreiterung des Bügels in Eingriff mit der Eingriffsvertiefung des Schlossgehäuses, wodurch eine Verkrallung des Bügels an dem Schlosskörper erzielt wird. Hierdurch wird ein gewaltsames Lösen des Formschlusses zwischen dem Bügel und dem Schlosskörper verhindert oder zumindest erheblich erschwert. Vorzugsweise ist an beiden Enden des Sicherungsabschnitts des Bügels eine derartige Blockierverbreiterung vorgesehen, die mit einer jeweiligen Eingriffsvertiefung des Schlosskörpers zusammenwirkt.

Um im Falle der erläuterten L-förmigen Ausbildung des Bügels das Schloss besonders einfach an dem zu sichernden Objekt festlegen zu können, ist es ferner bevorzugt, wenn der genannte Aufnahmespalt sich parallel zu der Bewegungsrichtung des Bügels oder in einem spitzen Winkel hierzu erstreckt, d.h. in einem Winkel <45°. Eine gewisse Schrägstellung ist besonders vorteilhaft im Falle einer Ausgestaltung des Bügelschlosses als Bremsscheibenschloss, da hierdurch die Handhabung vereinfacht ist, insbesondere das Betätigen des Schließwerks, wenn das Schloss an einer Bremsscheibe eines Fahrzeugrads festgelegt ist.

Zu einer vereinfachten Handhabung des Schlosses trägt auch bei, wenn eine Schlüsseleinführöffnung des Schließwerks, die an einer dem Aufnahmespalt gegenüberliegenden Seite des Schlosskörpers vorgesehen ist, bezüglich der Erstreckungsrichtung des Aufnahmespalts seitlich versetzt angeordnet ist. Mit anderen Worten soll die Schlüsseleinführöffnung an der betreffenden Seite des Schlosskörpers außermittig angeordnet sein. Wenn das Schloss an einer Bremsscheibe eines Fahrzeugs festgelegt ist, wird durch diese außermittige Anordnung verhindert, dass der Zugang zu dem Schließwerk für den Benutzer durch Teile des Fahrzeugs erschwert wird.

Die Erfindung bezieht sich auch auf die Verwendung eines Bügelschlosses der genannten Art als Bremsscheibenschloss.

Die Erfindung wird nachfolgend lediglich beispielhaft unter Bezugnahme auf die Zeichnungen erläutert, wobei die Erfindung nicht auf das nachfolgend beschriebene Bremsscheibenschloss beschränkt ist sondern auch bei anderen Schlosstypen Anwendung findet, beispielsweise bei Vorhängeschlössern.
- Fig. 1 und 2: zeigen eine Perspektivansicht eines Bremsscheiben- schlosses in einer Öffnungsstellung bzw. Schließstel- lung des Bügels.
- Fig. 3: zeigt das Bremsscheibenschloss in einer Zwischenstel- lung des Bügels bei entferntem Außengehäuse.
- Fig. 4, 5 und 6: zeigen eine Vorderansicht, eine Seitenansicht bzw. eine Draufsicht des Bremsscheibenschlosses.
- Fig. 7: zeigt einen mittigen Längsschnitt des Bremsscheiben- schlosses in der Öffnungsstellung des Bügels.
- Fig. 8: zeigt einen mittigen Längsschnitt entlang einer Ebene, die senkrecht zu der Schnittebene gemäß Fig. 7 steht.
- Fig. 9: zeigt einen mittigen Längsschnitt des Bremsscheiben- schlosses in der Schließstellung des Bügels.
- Fig. 10: zeigt einen mittigen Längsschnitt entlang einer Ebene, die senkrecht zu der Schnittebene gemäß Fig. 9 steht.

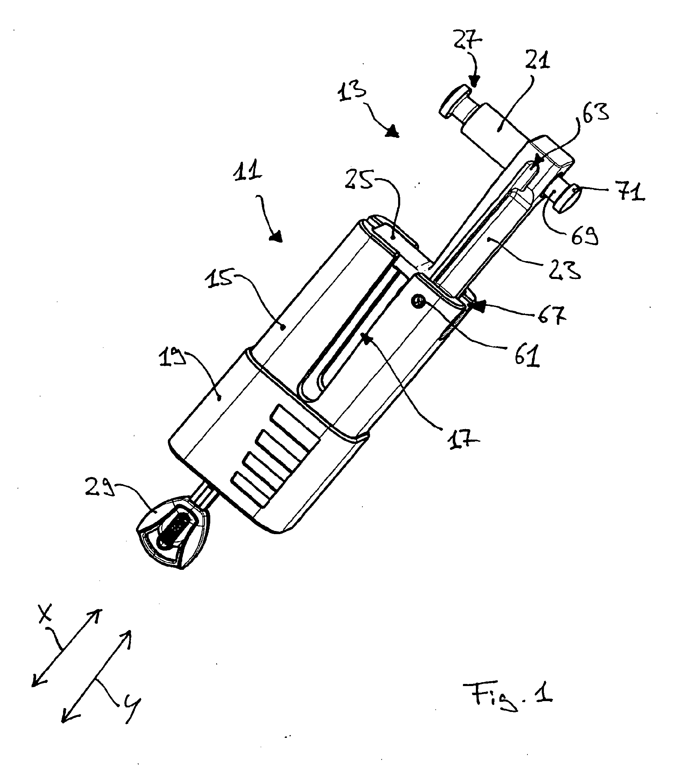

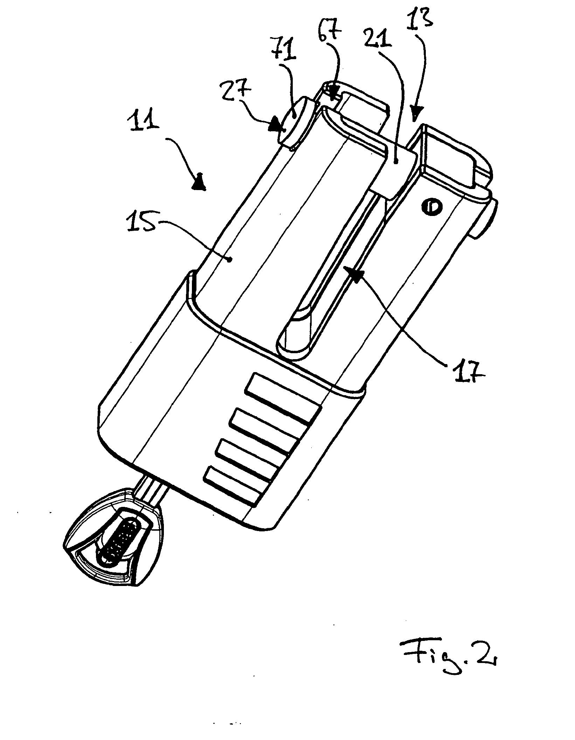

Fig. 1 und 2 zeigen ein Bügelschloss, das als ein Bremsscheibenschloss ausgebildet ist und einem Schlosskörper 11 und einen Bügel 13 aufweist. Der Bügel 13 ist an dem Schlosskörper 11 translatorisch beweglich gelagert. Fig. 1 zeigt den Bügel 13 in einer Öffnungsstellung, während Fig. 2 den Bügel 13 in einer Schließstellung zeigt.

Der Schlosskörper 11 besitzt ein Außengehäuse 15, das durch einen Rohrabschnitt mit einem im Wesentlichen rechteckigen Querschnitt und abgerundeten Kanten ausgebildet ist. Die Längsachse des Außengehäuses 15 entspricht der Bewegungsrichtung X des Bügels 13. An dem für das Ausfahren des Bügels 13 vorgesehenen Ende besitzt das Außengehäuse 15 einen Aufnahmespalt 17.

An dem anderen Ende ist das Außengehäuse 15 mit einer Abdeckung 19 aus Kunststoff versehen. Bezogen auf die Öffnungsstellung gemäß Fig. 1, also wenn der Bügel 13 aus dem Schlosskörper 11 ausgefahren ist, besitzt der Bügel 13 außerhalb des Schlosskörpers 11 im Wesentlichen eine L-Form. Der eine Schenkel dieser L-Form ist durch einen länglichen Sicherungsabschnitt 21 in Form eines gehärteten Bolzens gebildet, der sich senkrecht zu der Bewegungsrichtung X des Bügels 13 erstreckt. Der andere Schenkel der L-Form ist durch einen länglichen Verbindungsabschnitt 23 gebildet, der sich parallel zu der Bewegungsrichtung X erstreckt. Der Verbindungsabschnitt 23 geht innerhalb des Schlosskörpers 11 in einen Halteabschnitt 25 über, wie nachfolgend noch erläutert wird. Der Verbindungsabschnitt 23 und der Halteabschnitt 25 sind durch ein einziges Gussteil gebildet.

Das gezeigte Bremsscheibenschloss dient zum Sichern eines Motorrads oder dergleichen gegen eine unbefugte Benutzung. Hierfür wird in der Öffnungsstellung des Bügels 13 gemäß Fig. 1 das freie Ende 27 des Sicherungsabschnitts 21 in eine Öffnung einer Bremsscheibe des betreffenden Fahrzeugs eingeführt. Anschließend wird der Schlosskörper 11 derart auf die Bremsscheibe aufgesetzt, dass die Bremsscheibe in den Aufnahmespalt 17 eingreift und der Bügel 13 die Schließstellung gemäß Fig. 2 einnimmt, in der der Sicherungsabschnitt 21 Bügels 13 den Aufnahmespalt 17 verschließt. Sodann wird mittels eines zugeordneten Schlüssels 29 eine nachfolgend noch erläuterte Verriegelungseinrichtung betätigt, um den Bügel in der Schließstellung relativ zu dem Schlosskörper 11 zu verriegeln. Somit ist das Bremsscheibenschloss an der Bremsscheibe festgelegt.

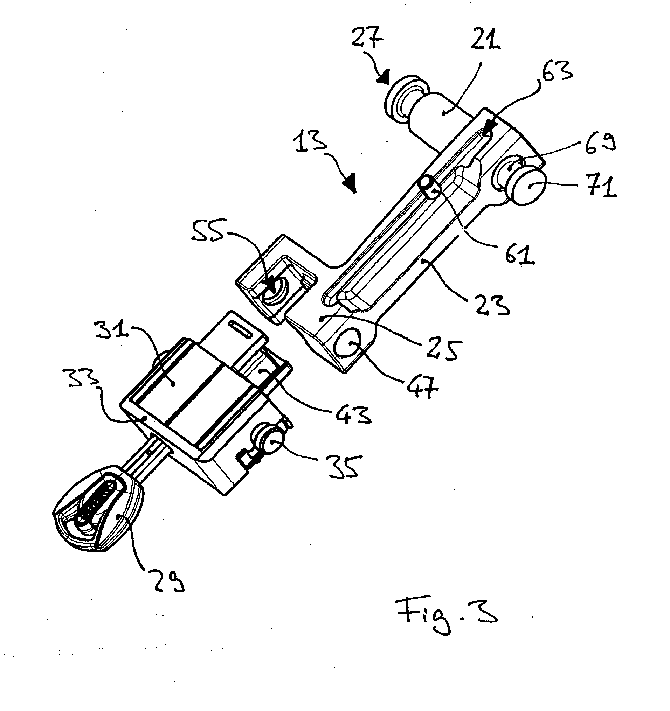

Fig. 3 zeigt den Bügel 13 in einer Zwischenstellung, wobei das Außengehäuse 15 und die Abdeckung 19 des Schlosskörpers 11 weggelassen sind. Zu erkennen sind somit der bereits genannte Halteabschnitt 25 des Bügels 13 sowie ein Innengehäuse 31, ein U-förmiges Abdeckblech 33 und zwei Befestigungsstifte 35 des Schlosskörpers 11.

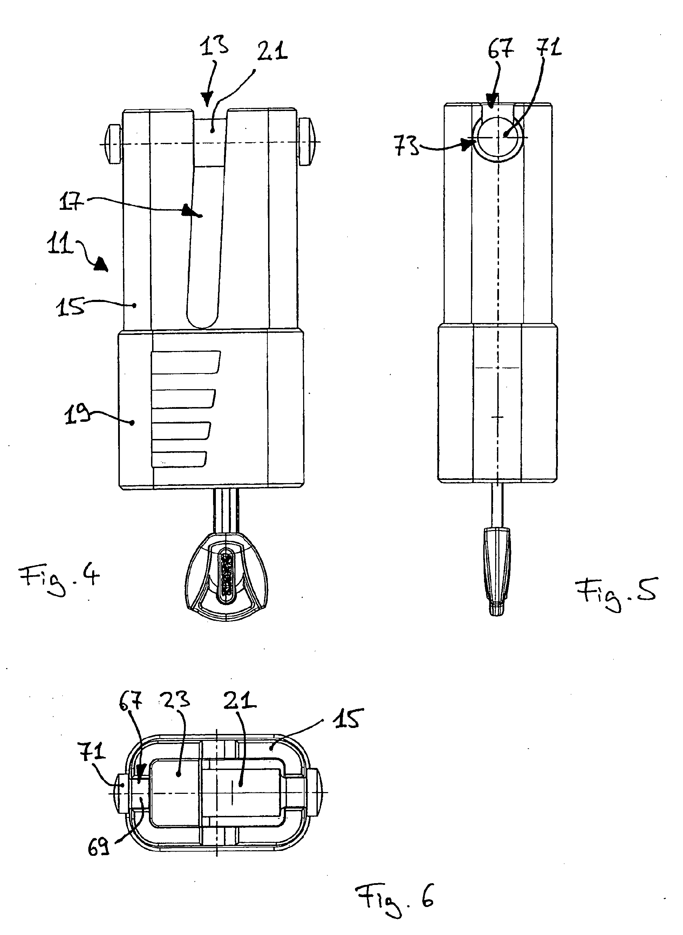

Fig. 4 bis 6 zeigen weitere Einzelheiten des Bremsscheibenschlosses, wobei der Bügel 13 sich in der Schließstellung befindet.

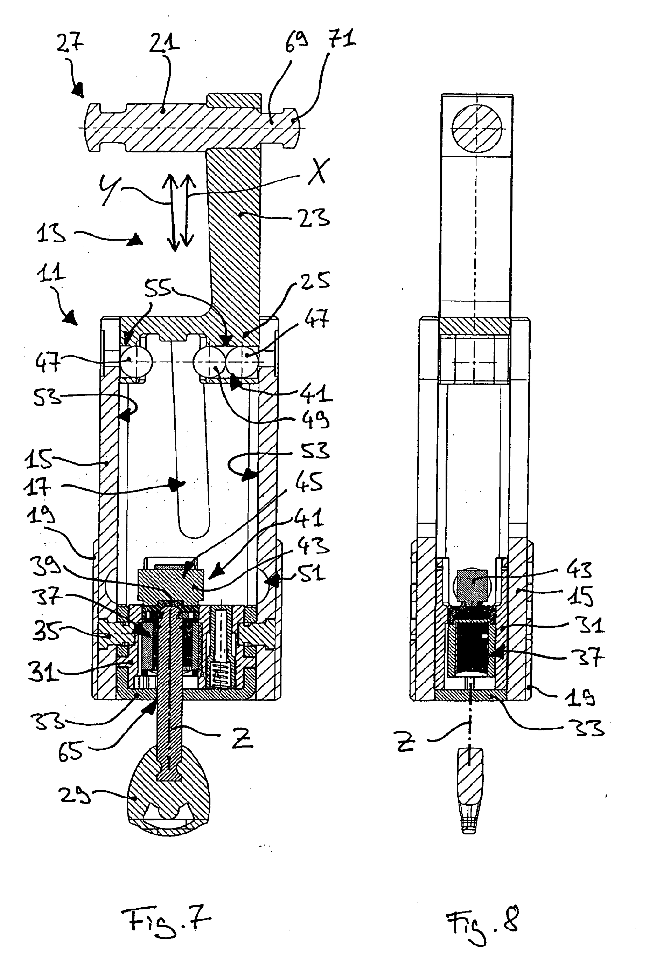

Anhand der Fig. 7 bis 10 wird der Aufbau des Bremsscheibenschlosses nachfolgend noch genauer erläutert.

In dem Schlosskörper 11 ist ein Schließwerk 37 in Form eines Scheibenschließzylinders aufgenommen, welches in bekannter Anordnung ein drehfest gehaltenes Zylindergehäuse und einen in dem Zylindergehäuse drehbaren Zylinderkern aufweist. Das Schließwerk 37 sitzt in dem Innengehäuse 31 und ist über die Schenkel des Abdeckblechs 33 und die Befestigungsstifte 35 mit dem Außengehäuse 15 fest verbunden ist. Das Schließwerk 37 besitzt einen Mitnehmer 39, der mittels des zugeordneten Schlüssels 29 drehbeweglich ist, und zwar zwischen der gezeigten Verriegelungsstellung und einer hierzu um 90° versetzten Entriegelungsstellung.

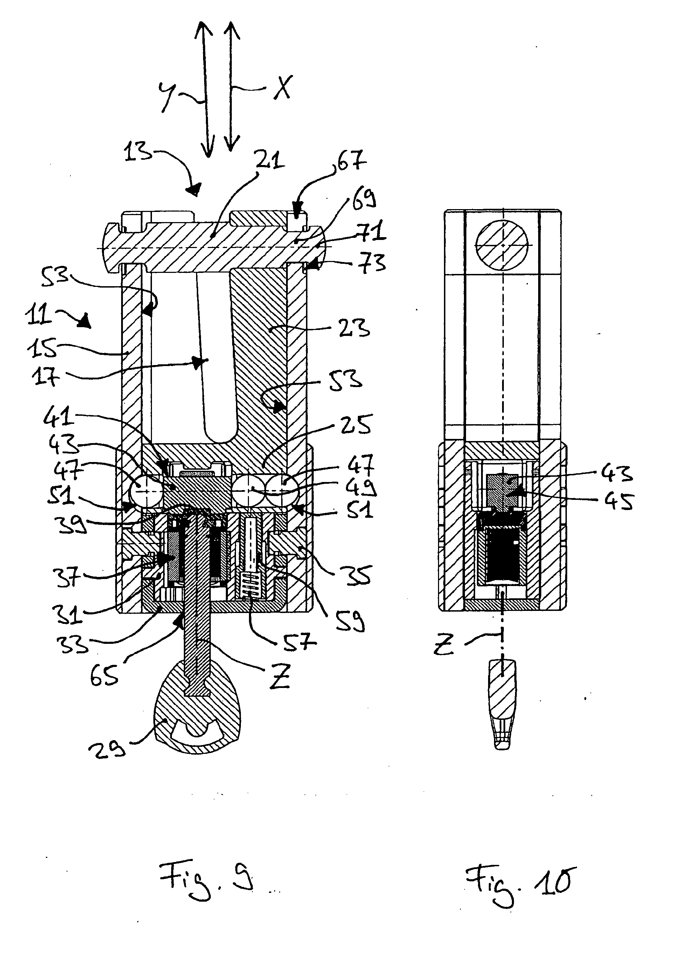

Der Mitnehmer 39 wirkt mit einer Verriegelungseinrichtung 41 zusammen. Diese weist ein Antriebselement 43 auf, das mit dem Mitnehmer 39 starr und somit drehfest gekoppelt ist. Das Antriebselement 43 ist als ein Kugelschieber ausgebildet und besitzt einen ovalen Querschnitt. Die Mantelfläche des Antriebselements 43 bildet somit eine Nockenfläche 45, die bezüglich der Betätigungsachse Z des Schließwerks 37 einen in Umfangsrichtung variierenden Radius besitzt. Die Verriegelungseinrichtung 41 besitzt ferner zwei Riegelelemente 47 in Form von Verriegelungskugeln sowie ein ebenfalls kugelförmiges Abstandshalterelement 49. Die Verriegelungseinrichtung 41 ist zwischen dem Mitnehmer 39 des Schließwerks 37, dem Bügel 13 und dem Außengehäuse 15 des Schlosskörpers 11 wirksam, wobei die Verriegelungseinrichtung 41 den Bügel 13 an dem Außengehäuse 15 verriegelt, wenn der Bügel 13 sich in der Schließstellung befindet und der Mitnehmer 39 sich in der Verriegelungsstellung befindet. Wie in Fig. 9 gezeigt ist, drängt der Mitnehmer 39 in der Verriegelungsstellung die Riegelelemente 47, bezogen auf die Betätigungsachse Z (Fig. 7 und 9), radial nach außen, so dass die beiden Riegelelemente 47 in eine jeweilige Eingriffsöffnung 51 an der Innenseite des Außengehäuses 15 eingreifen und den Bügel 13 somit gegen eine Bewegung relativ zu dem Außengehäuse 15 blockieren.

Eine Besonderheit des gezeigten Bremsscheibenschlosses besteht darin, dass ein Teil der Verriegelungseinrichtung 41, nämlich die beiden Riegelelemente 47 und das Abstandshalterelement 49, gemeinsam mit dem Bügel 13 zwischen der Öffnungsstellung und der Schließstellung des Bügels 13 bewegbar ist. Hierfür sind die Riegelelemente 47 und das Abstandshalterelement 49 nicht etwa in dem Innengehäuse 31 gehalten und geführt, sondern in dem Halteabschnitt 25 des Bügels 13, der die Riegelelemente 47 und das Abstandshalterelement 49 umfänglich umgreift und somit entlang der Bewegungsrichtung X mitführt. In der Schließstellung des Bügels 13 gemäß Fig. 9, wenn der Mitnehmer 39 sich in der Verriegelungsstellung befindet, sind die in die Eingriffsöffnungen 51 des Außengehäuses 15 eingreifenden Riegelelemente 47 teilweise in dem Halteabschnitt 25 des Bügels 13 aufgenommen.

Durch Verdrehen des Mitnehmers 39 mittels des Schlüssels 29 in die Entriegelungsstellung können die Riegelelemente 47 nach radial innen (wiederum bezogen auf die Betätigungsachse Z) weichen, wenn der Bügel 13 von der Schließstellung gemäß Fig. 9 in die Öffnungsstellung gemäß Fig. 7 gelegt werden soll. Für diese Bewegung entlang der Richtung X ist der Bügel 13 an zwei einander gegenüberliegenden Führungsflächen 53 an der Innenseite des Außengehäuses 15 gelagert. Die beiden Führungsflächen 53 sichern während dieser Bewegung des Bügels 13 zugleich die beiden Riegelelemente 47 gegen ein Herausfallen aus dem Halteabschnitt 25 des Bügels 13 nach außen. Nach innen hingegen (also in Richtung der Betätigungsachse Z des Schließwerks 37) können die Riegelelemente 47 in dem Halteabschnitt 25 beispielsweise aufgrund einer Querschnittsverjüngung gefangen sein.

Ein besonderer Vorteil des gezeigten Bremsscheibenschlosses besteht darin, dass das Gehäuse einen einfachen und stabilen Aufbau besitzt: Das Außengehäuse 15 ist aus einem mit geringem Aufwand bearbeiteten Rohrabschnitt gebildet, und auch das Innengehäuse 31 benötigt keine besondere Struktur zum Aufnehmen der Riegelelemente 47 und des Abstandshalterelements 49. Stattdessen sind diese Elemente 47, 49 der Verriegelungseinrichtung 41 in einer durchgehenden Bohrung 55 in dem Halteabschnitt 25 des Bügels 13 aufgenommen.

Ferner besitzt das Bremsscheibenschloss innerhalb der Erstreckungsebene des Bügels 13 (Fig. 7 und 9) bezogen auf eine Richtung senkrecht zu der Bewegungsrichtung X des Bügels 13 bzw. der Betätigungsachse Z des Schließwerks 37 eine schmale Bauform. Dies wird dadurch erreicht, dass der Bügel 13 nicht etwa, wie bei bekannten Vorhängeschlössern, zwischen dem jeweiligen Riegelelement 47 und dem Außengehäuse 15 angeordnet ist, sondern die Riegelelemente 47 umgreift. Das Verriegeln des Bügels 13 an dem Außengehäuse 15 erfolgt hierbei dadurch, dass die Riegelelemente 47 an der der Betätigungsachse Z abgewandten Außenseite des Bügels 13 mit dem Außengehäuse 15 zusammenwirken (d.h. an der Trennfläche zwischen dem Bügel 13 und den Führungsflächen 53 des Außengehäuses 15).

Nachfolgend werden noch weitere Vorteile des Bremsscheibenschlosses erläutert:

Der Bügel 13 ist in Richtung der Öffnungsstellung vorgespannt. Hierdurch ergibt sich eine vereinfachte Handhabung, da allein durch eine Entriegelungsbetätigung des Schließwerks 37 und somit des Mitnehmers 39 der Bügel 13 automatisch aus dem Schlosskörper 11 ausgestoßen wird, so dass das freie Ende 27 des Sicherungsabschnitts 21 in die betreffende Belüftungsöffnung der Bremsscheibe eingeführt werden kann. Sobald dies geschehen ist, wird der Schlosskörper 11 entgegen der Vorspannung auf die Bremsscheibe aufgesetzt, bis der Bügel 13 wieder die Schließstellung einnimmt und in dieser verriegelt wird. Für die erläuterte Vorspannung ist in dem Innengehäuse 31 eine Auswurffeder 57 mit einem Auswurfbolzen 59 vorgesehen (Fig. 9). Ein in das Außengehäuse 15 eingesetzter Sicherungsstift 61 wirkt mit einer Führungsnut 63 des Verbindungsabschnitts 23 des Bügels 13 zusammen (Fig. 3), um zu verhindern, dass der Bügel 13 aus dem Außengehäuse 15 herausfällt. Hierdurch ist der Bügel 13 also an dem Schlosskörper 11 dauerhaft gesichert.

Bezüglich der Anwendung als Bremsscheibenschloss ist es ferner von Vorteil, dass der Aufnahmespalt 17 sich nicht genau parallel zu der Bewegungsrichtung X des Bügels 13 bzw. der Betätigungsachse Z des Schließwerks 37 erstreckt, sondern in einem spitzen Winkel hierzu (vgl. Fig. 9). Hierdurch ergibt sich eine verbesserte Zugänglichkeit des Schließwerks 37 für den Benutzer, wenn das Bremsscheibenschloss an einer Bremsscheibe eines Fahrzeugs festgelegt ist.

Eine vereinfachte Handhabung ergibt sich ferner dadurch, dass der Schlosskörper 11 für den Schlüssel 29 eine Schlüsseleinführöffnung 65 besitzt (Fig. 7 und 9), die an einer dem Aufnahmespalt 17 abgewandten Seite des Schlosskörpers 11 vorgesehen ist, wobei die Schlüsseleinführöffnung 65 (entsprechend der Betätigungsachse Z des Schließwerks 37) bezüglich der Erstreckungsrichtung Y des Aufnahmespalts 17 seitlich versetzt angeordnet ist. Die außermittige Anordnung des Schließwerks 37 wird durch das Abstandshalterelement 49 ermöglicht.

Schließlich besteht ein besonderer Vorteil des gezeigten Bremsscheibenschlosses auch noch in dem Zusammenwirken des Sicherungsabschnitts 21 des Bügels 13 mit dem Außengehäuse 15 des Schlosskörpers 11. Das Außengehäuse 15 besitzt seitlich zwei Einführschlitze 67, in die ein jeweiliger Verbindungshals 69 des Sicherungsabschnitts 21 eingreift, wenn der Bügel 13 in das Außengehäuse 15 eingefahren wird (Schließstellung gemäß Fig. 9). Die äußersten Enden des Sicherungsabschnitts 21 des Bügels 13 sind durch eine jeweilige Blockierverbreiterung 71 gebildet. Die beiden Blockierverbreiterungen 71 ragen in der Schließstellung des Bügels 13 über das Außengehäuse 15 geringfügig hinaus (Fig. 4 und 9). In Flucht zu den Blockierverbreiterungen 71 sind an der Außenseite des Außengehäuses 15 zwei Eingriffsvertiefungen 73 ausgebildet, deren Umriss geringfügig größer ist als jener der jeweiligen Blockierverbreiterung 71 (Fig. 5 und 9).

Ein typischer Aufbruchversuch besteht bei einem Bremsscheibenschloss darin, dass ein Meißel in den Aufnahmespalt 17 eingeschlagen wird, und zwar in den Zwischenraum zwischen der Bremsscheibe und dem Schlosskörper 11. Hierdurch soll der Aufnahmespalt 17 derart aufgeweitet werden, dass der Bügel 13 (insbesondere der Sicherungsabschnitt 21) den Aufnahmespalt 17 nicht mehr verschließt und das Schloss letztlich von der Bremsscheibe abgenommen werden kann. Dies wird bei dem gezeigten Bremsscheibenschloss jedoch dadurch verhindert, dass im Falle eines derartigen Aufspreizens des Außengehäuses 15 die Blockierverbreiterungen 71 des Sicherungsabschnitts 21 in Eingriff mit den Eingriffsvertiefungen 73 des Außengehäuses 15 gelangen und der Sicherungsabschnitt 21 des Bügels 13 sich somit an dem Außengehäuse 15 verkrallt.

### Bezugszeichenliste

- 11: Schlosskörper
- 13: Bügel
- 15: Außengehäuse
- 17: Aufnahmespalt
- 19: Abdeckung
- 21: Sicherungsabschnitt
- 23: Verbindungsabschnitt
- 25: Halteabschnitt
- 27: freies Ende des Sicherungsabschnitts
- 29: Schlüssel
- 31: Innengehäuse
- 33: Abdeckblech
- 35: Befestigungsstift
- 37: Schließwerk
- 39: Mitnehmer
- 41: Verriegelungseinrichtung
- 43: Antriebselement
- 45: Nockenfläche
- 47: Riegelelement
- 49: Abstandshalterelement
- 51: Eingriffsöffnung
- 53: Führungsfläche
- 55: Bohrung
- 57: Auswurffeder
- 59: Auswurfbolzen
- 61: Sicherungsstift
- 63: Führungsnut
- 65: Schlüsseleinführöffnung
- 67: Einführschlitz
- 69: Verbindungshals
- 71: Blockierverbreiterung
- 73: Eingriffsvertiefung

- X: Bewegungsrichtung des Bügels
- Y: Erstreckungsrichtung des Aufnahmespalts
- Z: Betätigungsachse des Schließwerks

## Patentansprüche

1. Bügelschloss mit einem Schlosskörper (11) und einem Bügel (13), der relativ zu dem Schlosskörper (11) zwischen einer Öffnungsstellung und einer Schließstellung bewegbar ist, wobei der Schlosskörper (11) ein Schlossgehäuse und ein Schließwerk (37) aufweist, das mit dem Schlossgehäuse fest verbunden ist und einen Mitnehmer (39) aufweist, wobei der Mitnehmer (39) wahlweise in eine Entriegelungsstellung oder in eine Verriegelungsstellung bewegbar ist, wobei in dem Schlossgehäuse ferner eine Verriegelungseinrichtung (41) vorgesehen ist, die zwischen dem Mitnehmer (39) des Schließwerks (37), dem Bügel (13) und dem Schlossgehäuse wirksam ist, wobei die Verriegelungseinrichtung (41) den Bügel (13) an dem Schlossgehäuse verriegelt, wenn der Bügel sich in der Schließstellung befindet und der Mitnehmer (39) des Schließwerks (37) sich in der Verriegelungsstellung befindet, wobei die Verriegelungseinrichtung (41) wenigstens ein Riegelelement (47) aufweist, welches gemeinsam mit dem Bügel (13) zwischen der Öffnungsstellung und der Schließstellung des Bügels (13) bewegbar ist, wenn der Mitnehmer (39) des Schließwerks (37) sich in der Entriegelungsstellung befindet,
**dadurch gekennzeichnet,**
**dass** die Verriegelungseinrichtung (41) ferner ein drehbewegliches Antriebselement (43) aufweist, das mit dem Mitnehmer (39) des Schließwerks (37) gekoppelt oder koppelbar ist und einen Nockenabschnitt (45) aufweist, der mit dem wenigstens einen Riegelelement (47) zusammenwirkt, um dieses bezogen auf die Betätigungsachse (Z) des Schließwerks (37) in radialer Richtung zu versetzen, wenn der Mitnehmer (39) von der Entriegelungsstellung in die Verriegelungsstellung gedreht wird.

2. Bügelschloss nach Anspruch 1, wobei das wenigstens eine Riegelelement (47) der Verriegelungseinrichtung (41) in einem Halteabschnitt (25) des Bügels (13) aufgenommen ist, während der Bügel (13) sich zwischen der Öffnungsstellung und der Schließstellung bewegt.

3. Bügelschloss nach Anspruch 2, wobei das wenigstens eine Riegelelement (47) der Verriegelungseinrichtung (41) teilweise in dem Halteabschnitt (25) des Bügels (13) aufgenommen ist und teilweise in eine Eingriffsöffnung (51) des Schlossgehäuses eingreift, wenn der Bügel (13) sich in der Schließstellung befindet und der Mitnehmer (39) des Schließwerks (37) sich in der Verriegelungsstellung befindet,
und/oder
wobei der Halteabschnitt (25) des Bügels (13) das wenigstens eine Riegelelement (47) der Verriegelungseinrichtung (41) umgreift.

4. Bügelschloss nach einem der Ansprüche 2 bis 3, wobei der Halteabschnitt (25) des Bügels (13) im Schlosskörper (11) verbleibt, während der Bügel (13) sich zwischen der Öffnungsstellung und der Schließstellung bewegt,
und/oder
wobei der Bügel (13) an einer Führungsfläche (53) an einer Innenseite des Schlossgehäuses beweglich gelagert ist, wobei die Führungsfläche (53) des Schlosskörpers (11) das wenigstens eine Riegelelement (47) der Verriegelungseinrichtung (41) in dem Halteabschnitt (25) des Bügels (13) sichert, während der Bügel (13) sich zwischen der Öffnungsstellung und der Schließstellung bewegt.

5. Bügelschloss nach einem der vorhergehenden Ansprüche, wobei die Verriegelungseinrichtung (41) an einer Außenseite des Bügels (13) mit dem Schlossgehäuse zusammenwirkt, um den Bügel (13) an dem Schlossgehäuse zu verriegeln, wenn der Bügel (13) sich in der Schließstellung befindet und der Mitnehmer (39) des Schließwerks (37) sich in der Verriegelungsstellung befindet.

6. Bügelschloss nach einem der vorhergehenden Ansprüche, wobei das wenigstens eine Riegelelement (47) durch eine Verriegelungskugel gebildet ist und das Antriebselement (43) durch einen Kugelschieber gebildet ist.

7. Bügelschloss nach einem der vorhergehenden Ansprüche, wobei das Antriebselement (43) der Verriegelungseinrichtung (41) mit dem Mitnehmer (39) des Schließwerks (37) starr gekoppelt ist.

8. Bügelschloss nach einem der vorhergehenden Ansprüche, wobei das Schlossgehäuse ein Außengehäuse (15) aufweist, das durch einen Rohrabschnitt mit einer Längsachse gebildet ist, die parallel zu der Bewegungsrichtung (X) des Bügels (13) verläuft,
und/oder
wobei der Bügel (13) in Richtung der Öffnungsstellung vorgespannt ist.

9. Bügelschloss nach einem der vorhergehenden Ansprüche, wobei der Bügel (13) in der Öffnungsstellung außerhalb des Schlosskörpers (11) im Wesentlichen L-förmig ist und einen länglichen Sicherungsabschnitt (21) und einen länglichen Verbindungsabschnitt (23) aufweist, wobei der Sicherungsabschnitt (21) sich quer zu der Bewegungsrichtung (X) des Bügels (13) erstreckt und ein freies Ende (27) besitzt, und wobei der Verbindungsabschnitt (13) sich im Wesentlichen parallel zu der Bewegungsrichtung (X) des Bügels (13) erstreckt und den Sicherungsabschnitt (21) mit dem Schlosskörper (11) verbindet.

10. Bügelschloss nach Anspruch 9, wobei der Sicherungsabschnitt (21) des Bügels (13) zumindest an dem freien Ende (27) eine Blockierverbreiterung (71) aufweist, die über das Schlossgehäuse übersteht, wenn der Bügel (13) sich in der Schließstellung befindet, wobei das Schlossgehäuse an seiner Außenseite in Flucht zu der Blockierverbreiterung (71) des Sicherungsabschnitts (21) des Bügels (13) eine Eingriffsvertiefung (73) aufweist, wobei die Eingriffsvertiefung (73) dazu ausgebildet ist, die Blockierverbreiterung (71) aufzunehmen, falls das Schlossgehäuse entlang der Erstreckungsrichtung des Sicherungsabschnitts (21) aufgeweitet wird.

11. Bügelschloss nach Anspruch 10, wobei der Sicherungsabschnitt (21) des Bügels (13) an seinen beiden Enden eine jeweilige Blockierverbreiterung (71) aufweist, die mit einer jeweiligen Eingriffsvertiefung (73) des Schlossgehäuses zusammenwirkt.

12. Bügelschloss nach einem der Ansprüche 9 bis 11, wobei der Sicherungsabschnitt (21) des Bügels (13) durch einen Bolzen gebildet ist, der separat von dem Verbindungsabschnitt (23) ausgebildet ist.

13. Bügelschloss nach einem der Ansprüche 9 bis 12, wobei der Schlosskörper (11) einen Aufnahmespalt (17) zur Aufnahme eines zu sichernden Objekts aufweist, wobei der Sicherungsabschnitt (21) des Bügels (13) den Aufnahmespalt (17) verschließt, wenn der Bügel (13) sich in der Schließstellung befindet.

14. Bügelschloss nach Anspruch 13, wobei der Aufnahmespalt (17) sich parallel zu der Bewegungsrichtung (X) des Bügels (13) oder in einem spitzen Winkel hierzu erstreckt,
und/oder
wobei der Schlosskörper (11) eine Schlüsseleinführöffnung (65) aufweist, die an einer dem Aufnahmespalt (17) abgewandten Seite des Schlosskörpers (11) vorgesehen ist, wobei die Schlüsseleinführöffnung (65) bezüglich der Erstreckungsrichtung (Y) des Aufnahmespalts (17) seitlich versetzt angeordnet ist.

15. Bügelschloss nach einem der vorhergehenden Ansprüche, wobei das Schließwerk (37) durch einen Schließzylinder gebildet ist, der ein in dem Schlossgehäuse befestigtes Zylindergehäuse und einen in dem Zylindergehäuse drehbaren Zylinderkern aufweist, wobei der Mitnehmer (39) an dem Zylinderkern vorgesehen ist.

## Claims

1. A hoop lock having a lock body (11) and having a hoop (13) which is movable relative to the lock body (11) between an open position and a closed position, wherein the lock body (11) has a lock housing and a locking mechanism (37) which is fixedly connected to the lock housing and has a driver (39), wherein the driver (39) is selectably movable into an unlatched position or into a latched position, wherein furthermore a latching device (41) is provided in the lock housing and is effective between the driver (39) of the locking mechanism (37), the hoop (13) and the lock housing, wherein the latching device (41) latches the hoop (13) to the lock housing when the hoop is in the closed position and the driver (39) of the locking mechanism (37) is in the latched position, wherein the latching device (41) has at least one latch element (47) which is movable together with the hoop (13) between the open position and the closed position of the hoop (13) when the driver (39) of the locking mechanism (37) is located in the unlatched position,
**characterized in that**
the latching device (41) furthermore has a rotationally movable drive element (43) which is coupled or couplable to the driver (39) of the locking mechanism (37) and has a cam section (45) which cooperates with the at least one latch element (47) to move it in the radial direction relative to the axis of actuation (Z) of the locking mechanism (37) when the driver (39) is rotated from the unlatched position into the latched position.

2. A hoop lock in accordance with claim 1, wherein the at least one latch element (47) of the latching device (41) is received in a holding section (25) of the hoop (13), while the hoop (13) moves between the open position and the closed position.

3. A hoop lock in accordance with claim 2, wherein the at least one latch element (47) of the latching device (41) is partly received in the holding section (25) of the hoop (13) and partly engages into an engagement opening (51) of the lock housing when the hoop (13) is in the closed position and the driver (39) of the locking mechanism (37) is in the latched position;
and/or
wherein the holding section (25) of the hoop (13) engages around the at least one latch element (47) of the latching device (41).

4. A hoop lock in accordance with one of the claims 2 to 3, wherein the holding section (25) of the hoop (13) remains in the lock body (11), while the hoop (13) moves between the open position and the locked position;
and/or
wherein the hoop (13) is movably supported at a guide surface (53) at an inner side of the lock housing, wherein the guide surface (53) of the lock body (11) secures the at least one latch element (47) of the latching device (41) in the holding section (25) of the hoop (13), while the hoop (13) moves between the open position and the closed position.

5. A hoop lock in accordance with any one of the preceding claims,
wherein the latching device (41) cooperates with the lock housing at an outer side of the hoop (13) to latch the hoop (11) to the lock housing when the hoop (13) is in the closed position and the driver (39) of the locking mechanism (37) is in the latched position.

6. A hoop lock in accordance with any one of the preceding claims, wherein the at least one latch element (47) is formed by a latching ball and the drive element (43) is formed by a ball slider.

7. A hoop lock in accordance with any one of the preceding claims, wherein the drive element (43) of the latching device (41) is rigidly coupled to the driver (39) of the locking mechanism (37).

8. A hoop lock in accordance with any one of the preceding claims, wherein the lock housing has an outer housing (15) which is formed by a tubular section having a longitudinal axis which extends parallel to the direction of movement (X) of the hoop (13); and/ or
wherein the hoop (13) is preloaded in the direction of the open position.

9. A hoop lock in accordance with any one of the preceding claims, wherein the hoop (13) is substantially L-shaped in the open position outside the lock body (11) and has an elongate securing section (21) and an elongate connection section (23), wherein the securing section (21) extends transversely to the direction of movement (X) of the hoop (13) and has a free end (27), and wherein the connection section (13) extends substantially parallel to the direction of movement (X) of the hoop (13) and connects the securing section (21) to the lock body (11).

10. A hoop lock in accordance with claim 9, wherein the securing section (21) of the hoop (13) has a widened blocking portion (71) at at least the free end (27), said widened blocking portion projecting beyond the lock housing when the hoop (13) is in the closed position, wherein the lock housing has an engagement recess (73) at its outer side aligned with the widened blocking portion (71) of the securing section (21) of the hoop (13), wherein the engagement recess (73) is configured to receive the widened blocking portion (71) if the lock housing is expanded along the direction of extent of the securing section (21).

11. A hoop lock in accordance with claim 10, wherein the securing section (21) of the hoop (13) has a respective widened blocking section (71) at its two ends, said widened blocking section cooperating with a respective engagement recess (73) of the lock housing.

12. A hoop lock in accordance with any one of the claims 9 to 11,
wherein the securing section (21) of the hoop (13) is formed by a bolt which is formed separately from the connection section (23).

13. A hoop lock in accordance with any one of the claims 9 to 12,
wherein the lock body (11) has a reception gap (17) for the reception of an object to be secured, wherein the securing section (21) of the hoop (13) closes the reception gap (17) when the hoop (13) is in the locked position.

14. A hoop lock in accordance with claim 13, wherein the reception gap (17) extends parallel to the direction of movement (X) of the hoop (13) or at an acute angle thereto;
and/or
wherein the lock body (11) has a key introduction opening (65) which is provided at a side of the lock body (11) remote from the reception gap (17), wherein the key introduction opening (65) is arranged laterally offset with respect to the direction of extent (Y) of the reception gap (17).

15. A hoop lock in accordance with any one of the preceding claims, wherein the locking mechanism (37) is formed by a lock cylinder which has a cylinder housing fastened in the lock housing and has a cylinder core rotatable in the cylinder housing, wherein the driver (39) is provided at the cylinder core.

## Revendications

1. Cadenas à étrier comportant un corps de cadenas (11) et un étrier (13), qui est déplaçable par rapport au corps de cadenas (11) entre une position ouverte et une position fermée, dans lequel le corps de cadenas (11) comprend un boîtier de cadenas et un mécanisme de fermeture (37), qui est relié fermement avec le boîtier de cadenas et comprend un élément d'entraînement (39), ledit élément d'entraînement (39) étant déplaçable sélectivement dans une position de déverrouillage ou dans une position de verrouillage, dans lequel il est en outre prévu dans le boîtier de cadenas un système de verrouillage (41) qui agit entre l'élément d'entraînement (39) du mécanisme de fermeture (37), l'étrier (13) et le boîtier de cadenas, dans lequel le système de verrouillage (41) verrouille l'étrier (13) sur le boîtier de cadenas quand l'étrier se trouve dans la position fermée et l'élément d'entraînement (39) du mécanisme de fermeture (37) se trouve dans la position de verrouillage, et le système de verrouillage (41) comprend au moins un élément formant verrou (47) qui est déplaçable conjointement avec l'étrier (13) entre la position ouverte et la position ferme de l'étrier (13) quand l'élément d'entraînement (39) du mécanisme de fermeture (37) se trouve dans la position de déverrouillage,
**caractérisé en ce que**
le système de verrouillage (41) comprend en outre un élément d'entraînement (43) mobile en rotation qui est accouplé ou susceptible d'être accouplé avec l'élément d'entraînement (39) du mécanisme de fermeture (37) et comprend une portion en came (45) qui coopère avec ledit au moins un élément formant verrou (47) pour déplacer celui-ci en direction radiale par rapport à l'axe d'actionnement (Z) du mécanisme de fermeture (37) quand l'élément d'entraînement (39) est tourné depuis la position de déverrouillage vers la position de verrouillage.

2. Cadenas à étrier selon la revendication 1, dans lequel ledit au moins un élément formant verrou (47) du système de verrouillage (41) est reçu dans une portion de maintien (25) de l'étrier (13), pendant que l'étrier (13) se déplace entre la position ouverte et la position fermée.

3. Cadenas à étrier selon la revendication 2, dans lequel ledit au moins un élément formant verrou (47) du système de verrouillage (41) est reçu partiellement dans la portion de maintien (25) de l'étrier (13) et s'engage partiellement dans une ouverture d'engagement (51) du boîtier de cadenas quand l'étrier (13) se trouve dans la position fermée et l'élément d'entraînement (39) du mécanisme de fermeture (37) se trouve dans la position de verrouillage,
et/ou dans lequel la portion de maintien (25) de l'étrier (13) entoure ledit au moins un élément formant verrou (47) du système de verrouillage (41).

4. Cadenas à étrier selon l'une des revendications 2 et 3, dans lequel la portion de maintien (25) de l'étrier (13) reste dans le corps de cadenas (11) pendant que l'étrier (13) se déplace entre la position ouverte et la position fermée,
et/ou dans lequel l'étrier (13) est monté déplaçable contre une surface de guidage (53) sur une face intérieure du boîtier de cadenas, de sorte que la surface de guidage (53) du corps de cadenas (11) bloque ledit au moins un élément formant verrou (47) du système de verrouillage (41) dans la portion de maintien (25) de l'étrier pendant que l'étrier (13) se déplace entre la position ouverte et la position fermée.

5. Cadenas à étrier selon l'une des revendications précédentes, dans lequel le système de verrouillage (41) coopère sur une face extérieure de l'étrier (13) avec le boîtier de cadenas afin de verrouiller l'étrier (13) sur le corps de cadenas quand l'étrier (13) se trouve dans la position fermée et l'élément d'entraînement (39) du mécanisme de fermeture (37) se trouve dans la position de verrouillage.

6. Cadenas à étrier selon l'une des revendications précédentes, dans lequel ledit au moins un élément formant verrou (47) est formé par une bille de verrouillage, et l'élément d'entraînement (43) est formé par un poussoir à bille.

7. Cadenas à étrier selon l'une des revendications précédentes, dans lequel l'élément d'entraînement (43) du système de verrouillage (41) est couplé rigidement avec l'élément d'entraînement (39) du mécanisme de fermeture (37).

8. Cadenas à étrier selon l'une des revendications précédentes, dans lequel le boîtier de cadenas comprend un boîtier extérieur (15), qui est formé par un tronçon tubulaire présentant un axe longitudinal qui s'étend parallèlement à la direction de déplacement (X) de l'étrier (13), et/ou dans lequel l'étrier (13) est précontraint en direction de la position ouverte.

9. Cadenas à étrier selon l'une des revendications précédentes, dans lequel l'étrier (13) est sensiblement en forme de L dans la position ouverte à l'extérieur du corps de cadenas (11) et comprend un tronçon de blocage allongé (21) et un tronçon de liaison allongé (23), tels que le tronçon de blocage (21) s'étend perpendiculairement à la direction de déplacement (X) de l'étrier (13) et possède une extrémité libre (27), et tels que le tronçon de liaison (13) s'étend sensiblement parallèlement à la direction de déplacement (X) de l'étrier (13) et relie le tronçon de blocage (21) au corps de cadenas (11).

10. Cadenas à étrier selon la revendication 9, dans lequel le tronçon de blocage (21) de l'étrier (13) comprend, au moins à l'extrémité libre (27), un élargissement de blocage (71) qui dépasse au-delà du boîtier de cadenas quand l'étrier (13) se trouve dans la position fermée, et le boîtier de cadenas présente sur sa face extérieure un renfoncement d'engagement (73) en alignement avec l'élargissement de blocage (71) du tronçon de blocage (21) de l'étrier (13), ledit renfoncement d'engagement (73) étant réalisé pour recevoir l'élargissement de blocage (71) dans le cas où le boîtier de cadenas est élargi le long de la direction d'extension du tronçon de blocage (21).

11. Cadenas à étrier selon la revendication 10, dans lequel le tronçon de blocage (21) de l'étrier (13) comprend à ses deux extrémités un élargissement de blocage respectif (71), qui coopère avec un renfoncement d'engagement respectif (73) du boîtier de cadenas.

12. Cadenas à étrier selon l'une des revendications 9 à 11, dans lequel le tronçon de blocage (21) de l'étrier (13) est formé par un goujon qui est réalisé séparément du tronçon de liaison (23).

13. Cadenas à étrier selon l'une des revendications 9 à 12, dans lequel le corps de cadenas (11) comporte une fente de réception (17) pour la réception d'un objet à sécuriser, dans lequel le tronçon de blocage (21) de l'étrier (13) ferme la fente de réception (17) quand l'étrier (13) se trouve dans la position fermée.

14. Cadenas à étrier selon la revendication 13, dans lequel la fente de réception (17) s'étend parallèlement à la direction de déplacement (X) de l'étrier (13) ou sous un angle aigu par rapport à cette direction,
et/ou dans lequel le corps de cadenas (11) comporte une ouverture d'introduction de clé (65), laquelle est prévue sur un côté du corps de cadenas (11) détourné de la fente de réception (17), et l'ouverture d'introduction de clé (65) est agencée en décalage latéralement par rapport à la direction d'extension (Y) de la fente de réception (17).

15. Cadenas à étrier selon l'une des revendications précédentes, dans lequel le mécanisme de fermeture (37) est formé par un cylindre de fermeture qui comprend un boîtier cylindrique fixé dans le boîtier de cadenas et une âme cylindrique en rotation dans le boîtier cylindrique, et l'élément d'entraînement (39) est prévu sur l'âme cylindrique.
